# EUROPEAN PATENT SPECIFICATION

(11) **EP 4 373 265 B1**
(45) Date of publication and mention of the grant of the patent: **26.02.2025**
(21) Application number: 22782924.9
(22) Date of filing: 07.09.2022
(51) Int. Cl.: A01K 97/02

(54) **BAIT DISPENSER AND METHOD OF USE THEREOF**
KÖDERSPENDER UND VERFAHREN ZUR VERWENDUNG DAVON
DISTRIBUTEUR D'APPÂT ET SON PROCÉDÉ D'UTILISATION

(30) Priority: 13.09.2021 GB 202113009
(43) Date of publication of application: 29.05.2024
(73) Proprietor: PINNIGER, Benjamin Christopher, Calne SN11 8SX (GB)
(72) Inventor: PINNIGER, Benjamin Christopher, Calne SN11 8SX (GB)
(74) Representative: Doherty, William
(86) International application number: PCT/GB2022/052278
(87) International publication number: WO 2023/037107

(56) References cited:
- WO-A1-2013/153367
- CN-U- 204 120 033
- CN-Y- 2 792 178
- JP-A- H08 112 053

## Description

The present invention relates to a bait dispenser suitable for the purpose of dispensing bait when fishing. The invention further relates to a method of using such a bait dispenser.

When fishing, it is common practice to attach bait to a hook and to disperse unattached bait in the water where the baited hook will be located. This is done in the hope the unattached bait will attract fish into the area, and thus increase the likelihood of a fish taking the bait attached to the hook. Traditionally, to gather fish in a specific area of a body of water, anglers form or use balls of bait, such as maggots in dough, and drop or throw them at the desired area. This is particularly ineffective, as the dough balls cannot efficiently release the feed. Additionally, it relies upon good aim when throwing the balls of bait and so can be an expensive and wasteful practice.

Consequently, it is common for anglers to use bait dispensers for dispensing bait during angling. The bait dispensers are filled with bait and then cast into the desired fishing area, where the bait is released. Common, cage like bait dispensers comprise a perforated cylinder connected to a fishing line with an open rear end. However, these run the risk of not all the bait reaching its intended location. Additionally, live bait such as crickets and grasshoppers are quite easily dropped or lost from conventional cage like bait dispensers because of the natural propensity of the bait to move suddenly.

Another well-known type of bait dispenser has a release mechanism at the front end of the bait dispenser activated upon impact with the water. Disadvantageously, the bait dispenser is required to strike the water nose-first in order to open and release the bait. An angler may not have the required casting skills to ensure that the bait dispenser enters the water nose first. If this is the case, the bait dispenser enters the water on its side, and it will fail to open as less force is transferred from the impact to the dispenser release mechanism. The use of such a dispenser can also be highly wasteful if the angler does not have the skill to align the casts. As the angler may then deposit bait outside of the specific area, this leads to wasted bait and a less effective fishing practice. Additionally, if the push button mechanism has a loose connection, potentially due to bait entering the mechanism, then less force is required to activate the release mechanism and so it is possible the dispenser may become unstable, and bait may fall out of the dispenser during flight.

CN 2 792 178 Y and CN 204 120 033 U disclose each a bait dispenser according to the preamble of claim 1.

The object of the present invention is to provide a bait dispenser that solves the above stated problems.

According to a first aspect of the invention defined in claim 1, there is provided a bait dispenser for use with a fishing line, the bait dispenser comprising: a bait dispenser body having a head and a tail portion; the head portion having first and second bait receivers together defining a bait receiving chamber; the first and second bait receivers being moveable relative to each other between an open and a closed condition at an articulation element located at or adjacent to the tail portion; and a releasable securing means at or adjacent to the tail portion for securing the first and second bait receivers in the closed condition.

Advantageously, the releasable securing means and articulation element, which form the opening mechanism of the bait dispenser, are positioned at or adjacent to the tail portion, and therefore the bait dispenser is not required to strike nose-first into the water for it to be operated. Additionally, the position of the releasable securing means reduces the likelihood of bait entering the releasable securing means and causing the releasable securing means to get stuck in the closed condition and not release, or to release prematurely.

Preferably, the tail portion may be at least in part formed from a buoyant or substantially buoyant material. The tail portion will therefore float, and bait is released via the head portion under gravity. Beneficially, this would facilitate the dispersion of the bait as it allows the bait dispenser to right itself in the water and stay evenly balanced in the water, such that the bait containing chamber is in the correct orientation to release bait. Additionally, this ensures the bait dispenser does not sink if the fishing line breaks during casting.

Preferably, the head portion may have ogive or substantially ogive curvature. This curvature creates an aerodynamic shape to help stabilise the bait dispenser during casting, similar to that of a rocket. Therefore, there is an increased likelihood that the angler will hit the area of interest in the body of water. An ogive or substantially ogive curvature also reduces the disturbance to the water causes when the bait dispenser lands and so is less likely to disturb the fish.

Preferably, the tail portion has stops abuttable with the first and second bait receivers to limit the opening of the first and second bait receivers. The limitation of the opening of the first and second bait receivers ensures the bait is fully dispensed, but that the bait dispenser is easy to reel in in a controlled manner. The provision of a smooth, non-turbulent reeling motion reduces reeling time in between dispensing the bait and casting the catching line, which can be particularly important if fishing in moving water. Also, turbulence in general is undesirable as it may frighten the fish.

Preferably, each of the first and second bait receivers may have one or more apertures for the release of trapped air from the bait receiving chamber. Beneficially, the apertures ensure the head portion of the bait dispenser is not filled with air and therefore more buoyant than the tail portion of the bait dispenser. This helps to suitably orientate the bait dispenser in the water so the bait can be dispensed with ease. The apertures are preferably dimensioned so to not allow the escape of bait.

The releasable securing means comprises at least one locking element, which is preferably engagable with one or more engagement portions associated with each of the first and second bait receivers which mutually overlap in the closed condition for releasable engagement with the one of more locking elements. Locking elements which optionally interact with engagement portions on each side of the bait receiving chamber provide a mechanically simple means of locking the chamber from the tail end.

Each of the first and second bait receivers may have a pair of said engagement portions which are spaced apart in an axial direction to permit overlap with the said corresponding engagement portions of the other of the first and second bait receivers. Furthermore, each of the first and second bait receivers may have a pair of said engagement portions which are spaced apart in a lateral direction to permit engagement with a plurality of said locking elements. The axial and/or lateral spacing of engagement portions can allow for multiple points of locking of the bait dispenser, significantly reducing the likelihood of accidental bait ejection.

The or each locking element is formed as a locking pin. A pin forms a suitable formation to engage with apertures in the engagement portions of the bait receivers.

The or each locking element may have an at least in part tapered extent. Tapering of the extent of the locking element prevents over insertion of the locking element into the engagement portions, and may therefore prevent wedging which might make unlocking difficult.

Optionally, the releasable securing means may have a guide plate dimensioned to positionally align the or each locking element with the said engagement portions. The guide plate ensures correct alignment of the locking elements with the engagement portions, so that failed locking actions do not occur.

The releasable securing means may have a biasing member to bias the or each locking element into engagement with the engagement portions. The default preferred condition is that the bait dispenser is locked, and that only by a specific, user-defined action, is the bait receiver opened. Biasing towards the locked condition is therefore advantageous.

The or each locking element may be mounted to a moveable base, the releasable securing means having a moveable member movable relative to the moveable base. The two-part moveable mechanism has an advantage in the method of casting, since the moveable member only engages with the moveable base once the bait dispenser is in the correctly buoyant condition in the water, in which the moveable member slides into coupling under gravity. This provides a unique and advantageous means of allowing the user to open the bait dispenser at the desired place only.

The moveable member is housed in a channel extending through the tail portion of the bait dispenser body to allow slidable movement therein. The slidable movement ensures that gravity affects the moveable member only once correctly buoyed in the water, a side-effect of forming the tail portion from an at least in part buoyant material.

Optionally, the channel may have a throated portion to limit the extent of the slidable movement of the moveable member. The throated portion provides a means of keeping the moveable member captive within the bait dispenser, so that the bait dispenser does not accidently become lost in the body of water.

Preferably, the releasable securing means may have a fastening means to allow for releasable engagement between the moveable member and the moveable base. Optionally, the fastening means may comprise a first magnet on the moveable member and a second magnet on the moveable base.

The ability to couple and decouple the locking elements from the moveable member allows for the casting technique described below, in which there is no risk of accidental opening of the bait dispenser in the air, since the moveable member is brought out of contact with the moveable base.

The bait dispenser may further comprise a biasing element for biasing the first and second bait receivers into the open condition. To ensure correct opening of the bait dispenser on activation of the releasable securing means, it is preferred that there be a means of biasing to the open condition.

The articulation element may preferably be biased via a torsion spring. Beneficially, the torsion spring further facilitates the efficient dispersion of bait and the smooth reeling in of the bait dispenser. As the first and second bait receivers are rigidly held in a pre-determined angle by the spring and stops, the reeling in is less turbulent and the bait dispenser can aquaplane over the surface of the water, disturbing the water less and in turn, the fish less. The stops also have the advantage of ensuring the spring is not overloaded.

The releasable securing means includes a fishing line coupling engageable with an associated fishing line. Activation of the releasable securing means may be most readily achieved if a fishing line coupling is provided directly thereon.

Said fishing line coupling is provided on a moveable member of the releasable securing means. Since it is the moveable member being retracted that provides the trigger for release, it is preferred that the fishing line coupling be connected thereto.

The releasable securing means is released upon the application of a threshold force via the fishing line coupling and associated fishing line to enable the first and second bait receivers to move into the open condition. Said threshold force needs to be sized to be just enough to overcome the biasing force from the spring, but not sufficient to break the magnetic coupling. Permanent magnets are therefore preferred for the coupling means, due to their high magnetic strength.

The releasable securing means comprises a moveable member slidable within a channel of the tail portion, and a locking pin biased towards the head portion to secure the first and second bait receivers in the closed condition, the movable member and locking pin having complementary magnetic fastening means to allow releasable engagement with one another, and a rear end of the moveable member having a fishing line coupling for attaching the bait dispenser to an associated fishing line, a threshold force being applicable by the fishing line to draw the moveable member and locking pin upwards to permit the first and second bait receivers to move relative to one another to the open condition.

According to a second aspect of the invention defined in claim 15, there is provided a method of using a bait dispenser in accordance with the first aspect of the invention, the method comprising the steps of: a] loading bait into the bait receiving chamber when in the open condition; b] closing the bait receiving chamber using the releasable securing means; c] attaching the bait dispenser onto an associated fishing line; d] casting the bait dispenser into a body of water; e] positioning using the associated fishing line the bait dispenser in a desired position of the body of water; and f] exerting a threshold force using the associated fishing line on the releasable securing means to release the first and second bait receivers at the said desired position.

The method of use of the present invention allows for accurate placement of bait to be achieved without necessarily requiring precise casting ability on the part of the angler.

According to a third aspect which does not form part of the invention, there is provided a bait dispenser for use with a fishing line, the bait dispenser comprising: a bait dispenser body having first and second bait receivers together defining a bait receiving chamber; the first and second bait receivers being moveable relative to each other between an open and a closed condition; and a releasable securing means for securing the first and second bait receivers in the closed condition, the releasable securing means having a fishing line coupling engageable with an associated fishing line; wherein a threshold force is applicable to the releasable securing means via the associated fishing line to release the releasable securing means and to enable the first and second bait receivers to move into the open condition.

A remotely operable releasable bait dispenser has the ability to be triggered only in the event of the bait dispenser being correctly cast and positioned. This has a significant advantage over impact-triggered arrangements known in the art, which may scatter bait over a much wider area.

The invention will now be more particularly described, by way of example only, with reference to the accompanying drawings, in which:
Figure 1 shows a side view of a representative first embodiment of a bait dispenser in accordance with the first aspect of the invention, in a closed condition;
Figure 2 shows a side view of the bait dispenser of Figure 1, in an open condition;
Figure 3 shows a cross sectional view the bait dispenser of Figure 2, in a pre-loaded condition;
Figure 4 shows a cross sectional view of the bait dispenser of Figure 3, during a loading condition;
Figure 5 shows a cross sectional view of the bait dispenser of Figure 4, in a loaded condition;
Figure 6 shows a cross sectional view of the bait dispenser of Figure 5, in a flight condition;
Figure 7 shows a cross sectional view of the bait dispenser of Figure 6, in the closed condition in a body of water;
Figure 8 shows a cross sectional view of the bait dispenser of Figure 7, in the open condition in said body of water;
Figure 9 shows a side perspective view of a second embodiment of a bait dispenser in accordance with the first aspect of the invention;
Figure 10 shows a side view of the bait dispenser of Figure 9, in an open condition;
Figure 11a shows a vertical cross section through the bait dispenser of Figure 10, the releasable securing means being in a locked condition in which the moveable components are engaged;
Figure 11b shows the vertical cross section through the bait dispenser of Figure 11a, the releasable securing means being in an unlocked condition;
Figure 12 shows a lateral cross section of a tail portion of a third embodiment of bait dispenser in accordance with the first aspect of the invention; and
Figure 13 shows a side perspective view of the releasable securing means of the bait dispenser of Figure 12.

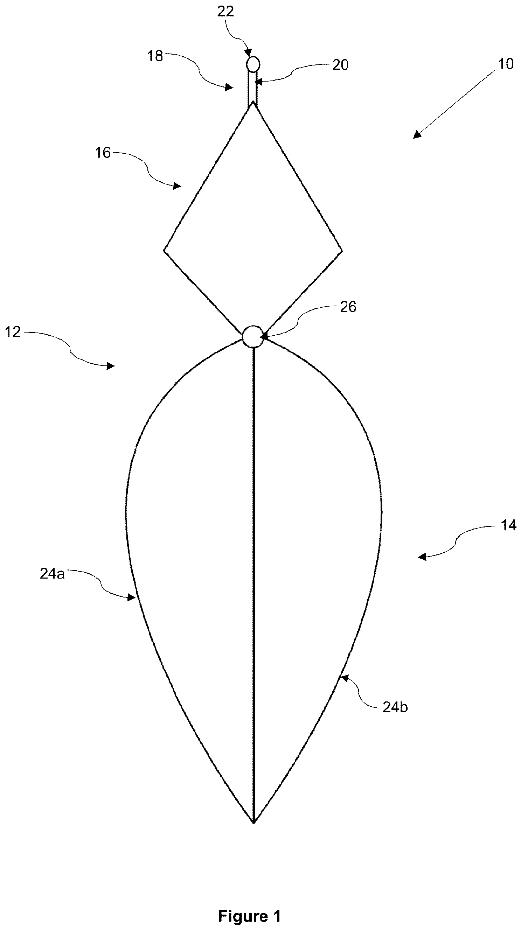

Referring to Figure 1, there is indicated a bait dispenser, referenced globally at 10 which is suitable for the purpose of dispensing bait when fishing. The bait dispenser 10 comprises a bait dispenser body 12 having a head portion 14 and a tail portion 16, and a releasable securing means 18 which is configured to enable opening and closing of the head portion 14. A moveable member 20 of the releasable securing means 18 is illustrated in Figure 1, showing the fishing line coupling 22 thereof.

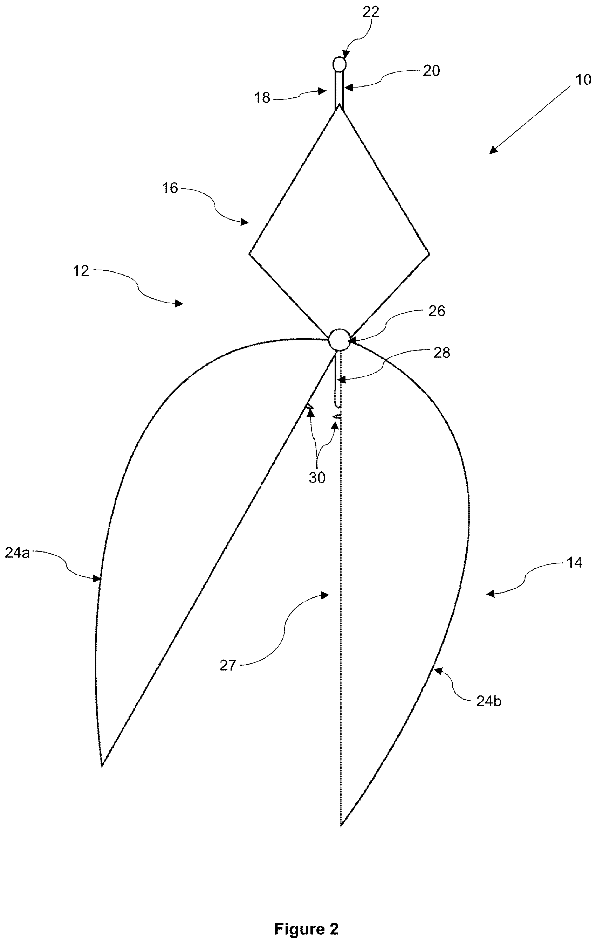

The head portion has first and second bait receivers 24a, 24b pivotably connected at an articulation element 26 so as to be movable relative to one another. Said first and second bait receivers 24a, 24b collectively form a bait receiving chamber 27 of the bait dispenser 10, first shown in Figure 2.

The terms forward and front as used herein will be understood to refer to the end of the bait dispenser 10, or components thereof, which, in use, is furthest from or distal to the fishing line to which it is attached. Rearward and rear as used herein will be understood to refer to the end of the bait dispenser 10, or components thereof, which, in use, is closest to the fishing line to which it is attached.

The tail portion 16 is at least in part formed from a preferably buoyant or substantially buoyant material. Beneficially, this facilitates the dispersion of the bait as it allows the bait dispenser 10 to right itself in the water, such that the bait receiving chamber 27 is in the correct orientation to release bait. Additionally, this ensures the bait dispenser 10 does not sink if the fishing line breaks during casting. Alternative materials can be envisaged; however these are likely to be less beneficial as the bait dispenser 10 may not efficiently disperse bait.

The head portion 14 is formed from a preferably rigid or substantially rigid or semi rigid material. The head portion 14 may beneficially be made from less buoyant materials than the tail portion 16. Alternatively, the head portion 14 could be provided with weights, preferably removable, to encourage the bait dispenser 10 to right itself under buoyancy in the water, so that on contact with the water the head portion 14 is the portion of the bait dispenser body 12 primarily in the body of water. In this case, the head portion 14 beneficially is manufactured from plastics, but could be manufactured from wood, metal or a combination thereof as required. The head portion 14 may also be manufactured from or include hydrophobic material to reduce water resistance, and to the aid aquaplaning of the bait dispenser 10 on reeling. Additionally, the rigidity of the head portion 14 aids with the loading of the bait dispenser 10.

The head portion 14 has a preferably ogive or substantially ogive curvature, with each of the first and second bait receivers 24a, 24b comprising half of the ogive nose cone. Alternatively, the head portion 14 may have conic, parabolic, elliptical, tangent ogive, spherically blunted conic or bi-conic curvature or the like. These shapes are preferable as they reduce drag in flight and reduce the disturbance to the water and fish when the bait dispenser 10 lands. Any shape that would induce aerodynamic properties to the overall shape of the bait dispenser body 12 may be imagined, such as teardrop, balloon, torpedo, or rocket shape to aid a smooth casting.

The first and second bait receivers 24a, 24b preferably have smooth major outer surfaces. Although the major outer surfaces are preferably smooth, they may be non-smooth, such as dimpled, ridged chequered and the like. However, this is envisaged as being less preferable due to the increased disturbance to the surface of the water.

As shown in Figure 2, the first and second bait receivers 24a, 24b of the head portion 14 define the bait receiving chamber 27. This allows for bait to be easily placed within the bait receiving chamber 27. The shape of the first and second bait receivers 24a, 24b also allows them to act as scoops for ease and speed of loading the bait receiving chamber 27, since they have concave inner surfaces. Preferably, the first and second bait receivers 24a, 24b have a similar or substantially similar shape. An embodiment with first and second bait receivers of different sizes and shape can be imagined, for instance, where the two receivers are dimensioned as mismatched jaws.

The articulation element 26 connects to the first and second bait receivers 24a, 24b to provide relative movement to one another. In an indicative embodiment, the articulation element 26 may comprise a hinge pin perpendicular to the axial direction of the bait dispenser 10 which is arranged to provide a hinge joining the first and second bait receivers 24a, 24b together. In a preferred embodiment, the hinge pin provides a pivot axis for one or both of the first and second bait receivers 24a, 24b to move away from the other. In the depicted embodiment, the second bait receiver 24b is fixed, whilst the first bait receiver 24a is free to pivot around the articulation element 26. Said second bait receiver 24b may be fixedly secured to, or integrally formed with, the tail portion 16 to achieve this. This may allow for the integral formation of bearings or an axle within the tail portion 16 to create the articulation element 26. It is appreciated other forms of articulation element could be provided. For instance, the first and second bait receivers could be joined at a living hinge, or indeed could move relative to one another in a linear fashion.

The first and second bait receivers 24a, 24b are secured in the closed condition by the releasable securing means 18 adjacent to the tail portion 16. The releasable securing means 18 comprises one or more locking elements 28 and one or more engagement portions 30 associated with each of the first and second bait receivers 24a, 24b. In the depicted embodiment, there is a single locking element, and this may be a preferred arrangement for simplicity of construction. As viewed from the side in Figure 2, the or each locking element 28 extends axially within the bait dispenser 10. When the corresponding engagement portions 30 of the first and second bait receivers 24a, 24b overlap with one another, the or each locking pin 28 can engage with overlapped apertures in the engagement portions 30 to secure the first and second bait receivers 24a, 24b together.

The or each locking element 28 is preferably formed as an elongate locking pin. The locking pins preferably have a circular or substantially circular cross section. Alternatively, any shape of locking element 28 which is complementarily shaped to the engagement portions 30 that ensures the engagement portions are secured with respect to one another may be viable. Although one locking element 28 is described herein, it is appreciated that one or more locking elements 28 could be used, as will be described in the later embodiments below.

Whilst a pin-like locking element 28 is shown, it will be apparent to the skilled person that alternative releasable mechanisms are feasible. For instance, a door-lock style latch, having a triangular prism shape, will allow for directional latching, with delatching only occurring on activation of a force from the fishing line. It will be clear that the locking pin arrangement described is therefore not the only one possible within the scope of the present invention.

The engagement portions 30 comprise locking element apertures dimensioned to allow the locking elements 28 to engage with the engagement portions 30 in the closed condition. The engagement portions 30 of opposing first and second bait receivers 24a, 24b may be spaced apart axially such that the or each engagement portion 30 mutually overlaps with the or each engagement portion 30 of the other of the first and second bait receivers 24a, 24b in the axial direction.

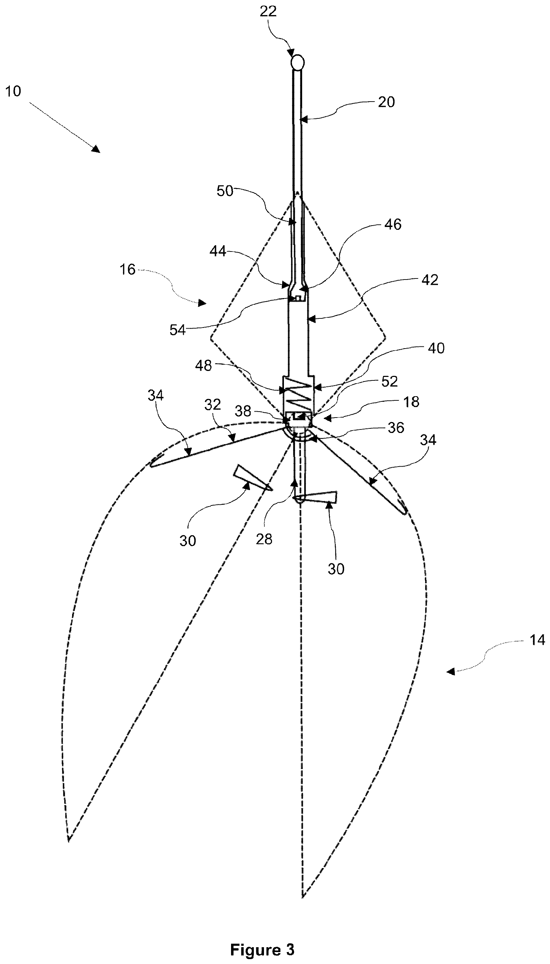

Figure 3 shows the bait dispenser 10 in cross section. The first and second bait receivers 24a, 24b are biased to the open condition by a biasing element 32. The biasing element 32 in this embodiment is formed as a torsion spring. A torsion spring may be defined by the features of a pair of contact arms 34 which respectively engage with the first and second bait receivers 24a, 24b, and a coil 36 between the contact arms 34. The coil 36 may be mounted around the articulation element 26 and each contact arm 34 then extends radially outward with respect to the coil 36 to allow for contact with the internal or external surface of the first and second bait receivers 24a, 24b respectively. The contact arms 34 of the biasing element 32 may be hooked at their outer ends for attachment to first and second bait receivers 24a, 24b.

Figure 3 shows various components of the releasable securing means 18. The locking pin 28 is connected to a moveable base 38 which is held captive in a first channel 40 within the tail portion 16. Preferably, the moveable base 38 has a greater lateral extent than the or each locking element 28. The moveable member 20 is positioned within a second channel 42, with a throated portion 44 of the second channel 42 being dimensioned to prevent a member head 46 of the moveable member 20 from being extracted therefrom.

The moveable base 38 is biased towards the head portion 14, and thus urging the or each locking pin 28 into a locked condition with the engagement portions 30. A base-biasing member 48, here shown as a compression spring, is located in the first channel 40 to provide the biasing force.

Whilst the moveable base 38 is biased towards the head portion 14, the moveable member 20 has a linear member body 50 which is freely slidable within the second channel 42. Only the presence of the throated portion 44 prevents the moveable member 20 from escaping the second channel 42. The moveable member 20 may be formed from a dense material, such as metal, so as to improve the sliding action. The smooth outer surfaces of such a metal moveable member 20 will also reduce friction.

Although in this illustrated embodiment the member body 50 has been described as cylindrical, it will be envisaged that the member body 50 may have a polygonal, substantially polygonal, or circular or substantially circular cross section.

The moveable base 38 and moveable member 20 have complementary fastening means to allow releasable engagement with one another, in the embodiment shown. It will, however, be apparent that an arrangement could be constructed in which the moveable base 38 and moveable member 20 were a unitary component. Preferably, the fastening means may comprise a first magnet 52 engaged with the moveable base 38 and a second magnet 54 engaged with the member head 46 of the moveable member 20. The first and second magnets 52, 54 are preferably formed as permanent magnets having a magnetic coupling force which cannot be overcome by the biasing force of the base-biasing member 48 alone.

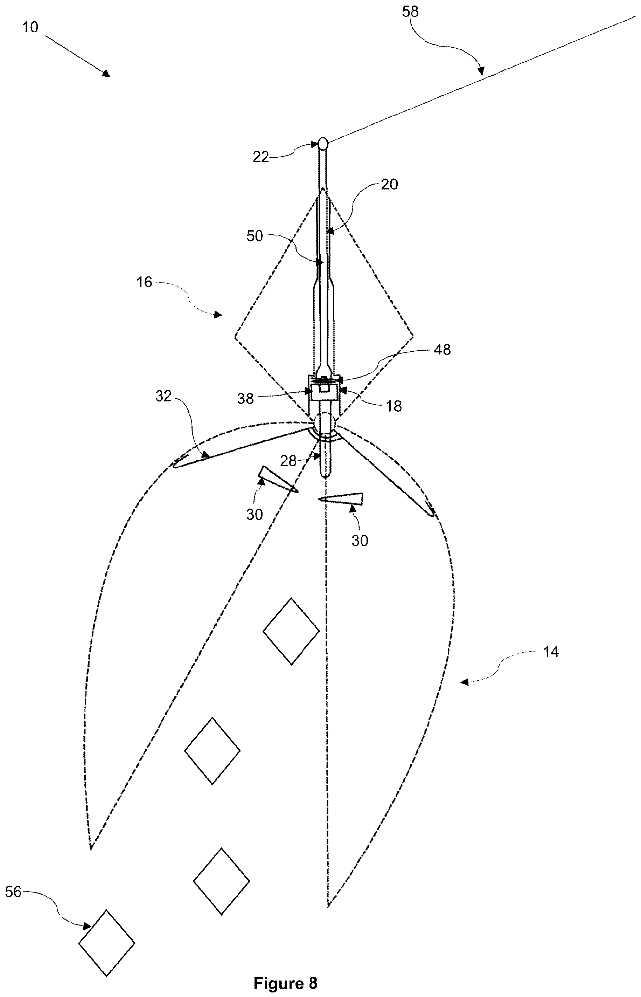

The method of use of the bait dispenser 10 is detailed in Figures 3 to 8. In Figure 3, the bait dispenser 14 is in an open condition. The first and second bait receivers 24a, 24b are open, the first bait receiver 24a having been urged away from the second bait receiver 24b by the biasing element 32. It is presumed that the user will have, at some point disengaged the releasable securing means 18 to enable the opening thereof. In Figure 3, the moveable member 20 and moveable base 38 are disengaged or decoupled, and thus the moveable base 38 is biased towards the head portion 14. However, the locking element 28 can only engage with one of the engagement portions 30, as the first bait receiver 24a is out of alignment.

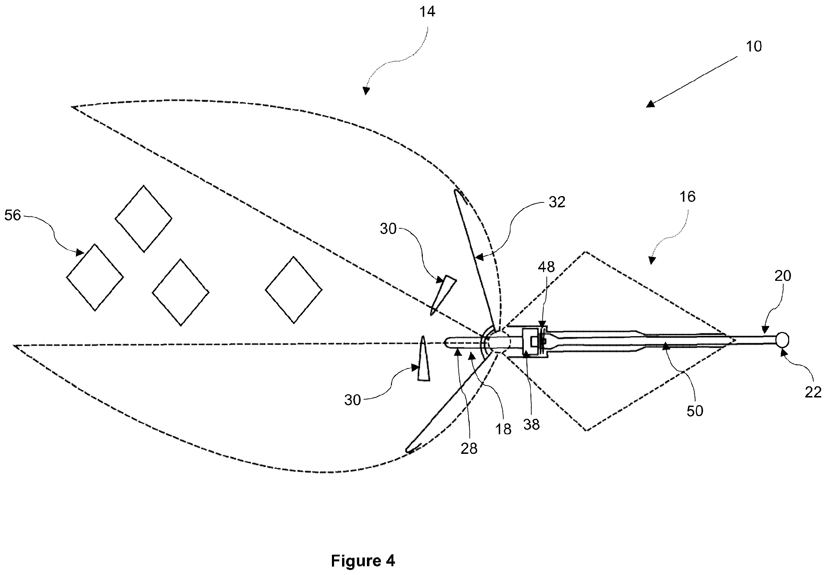

Figure 4 shows a loading condition. Whilst the bait receiving chamber 27 is accessible, bait 56 can be loaded into the bait dispenser 10, for example, by scooping into the second bait receiver 24b.

To close the bait dispenser 10, the moveable member 20 is first brought into engagement with the moveable base 38, to couple the first and second magnets 52, 54. Gentle retraction of the moveable member 20 results in retraction of the moveable base 38, so that the or each locking pin 28 is disengaged from the engagement portion 30. This is the condition of the releasable securing means 18 shown in Figure 4.

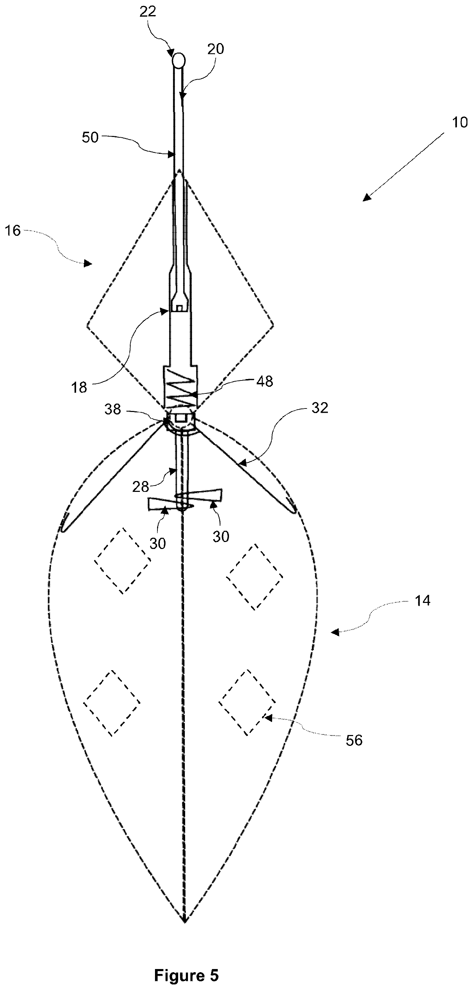

Once the bait 56 is loaded, the first and second bait receivers 24a, 24b can be manually urged shut, whilst the or each locking pin 28 is out of the way. Once shut, the moveable base 38 is moved so that the or each locking pin 28 engages with engagement portions 30 on both of the first and second bait receivers 24a, 24b simultaneously, locking the bait receiving chamber 27 shut. This can be performed either by pushing the moveable member 20 to move the moveable base 38 into position, or, as illustrated in Figure 5, by providing a sufficient threshold force to decouple the first and second magnets 52, 54, allowing the moveable base 38 to lock into position under the biasing force of the base-biasing member 48.

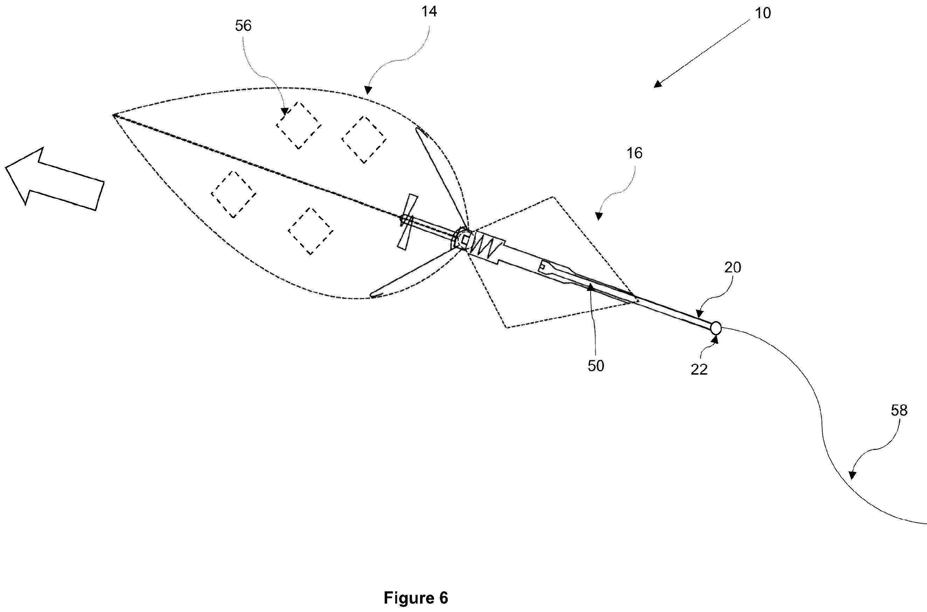

At the rear end of the moveable member 20 is the fishing line coupling 22 for attaching the bait dispenser 10 to an associated fishing line 58, as shown in Figure 6. The fishing line coupling 22 may have an opening for threading the fishing line 58 through and tying to the fishing line coupling 26. However, it is appreciated that other fishing line coupling arrangements that allow the bait dispenser 10 to be attached to the fishing line may be utilised, such as a hook or clip.

Once the bait dispenser 10 is closed, then the angler can attach it to a fishing line 58, and it can be cast into the relevant body of water. Most anglers of some competence will be able to cast the bait dispenser 10 into approximately the correct location, but will be unlikely to be able to successfully cast into the same spot every time.

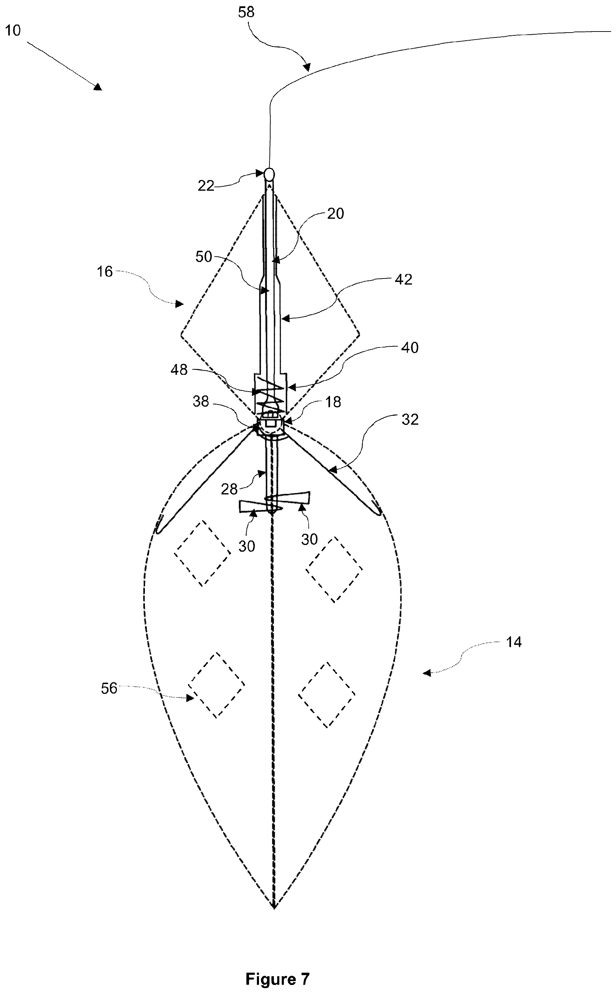

Upon landing in the water, the bait dispenser 10 will float in position without opening, held afloat by the buoyancy of the tail portion 16. Under gravity the moveable member 20 will move down the second channel 42 and engage with the moveable base 38, coupling the first and second magnets 52, 54 together. This is illustrated in Figure 7. The fishing line 58 should be relatively slack at this point, and therefore gentle reeling of the fishing line 58 will allow the angler to correctly position the bait dispenser 10 in the body of water. If this cannot be achieved, the bait dispenser 10 can be gently reeled back to the user for recasting.

The angler can open the first and second bait receivers 24a, 24b by releasing the releasable securing means 18 at the point they desire. To release the releasable securing means, the angler applies a threshold force counterbalancing the biasing force, by drawing the fishing line 58 taut with a jerk movement, to draw the moveable member 20 upwards, which in turn draws the moveable base 38 with it. The movement of the moveable base 38 disengages the or each locking pin 28 from the engagement portion 30 of the first and second bait receivers 24a, 24b. As the first and second bait receivers 24a, 24b are biased in the open condition by the biasing element 32, once the or each locking pin 28 disengages from the engagement portions 30, the first and second bait receivers 24a, 24b move relative to one another. This releases the bait 56 at the desired location.

It is appreciated, that in an alternative method of use, the bait dispenser 10 is cast beyond the desired fishing area and is purposely landed away from the fishing area. This has the advantage that the landing of the bait dispenser 10 will not scare fish away from the desired fishing area, therefore, the fishing line 58 can be gradually reeled in until the bait dispenser 10 reaches the target area, whereafter a threshold force can be applied to the fishing line to release the releasable securing means 18 and hence the bait 56 contained within the bait receiving chamber 27.

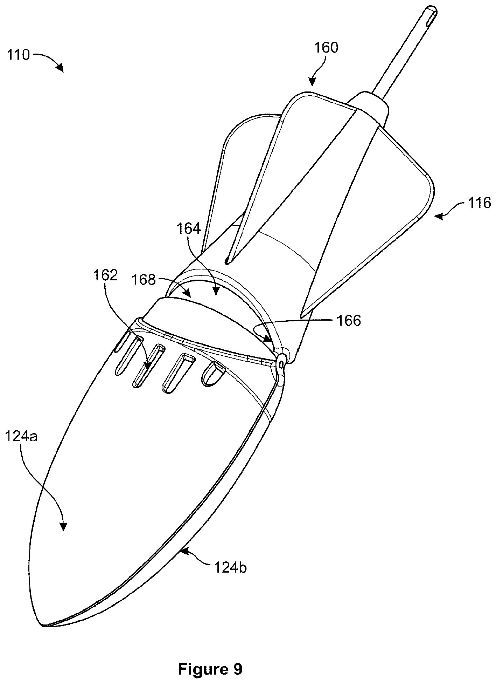

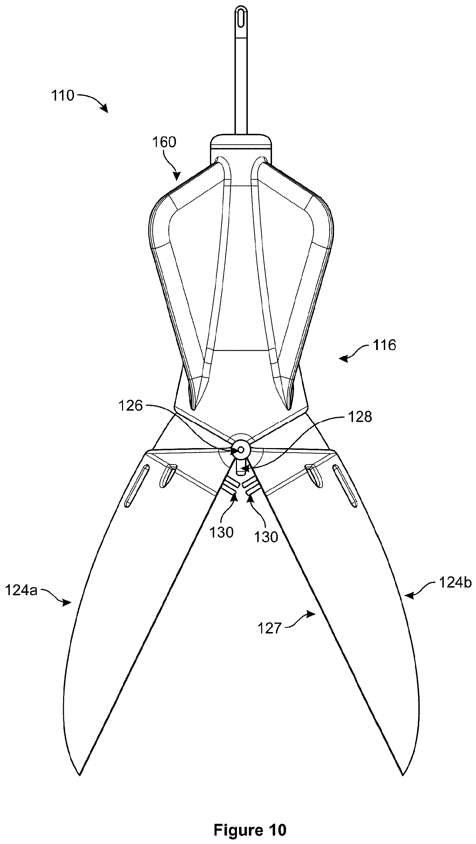

Figures 9 and 10 illustrate a more specific embodiment of the generalised bait dispenser described above. Similar or identical references refer to parts which are similar or identical to those described above, therefore, further detailed description is omitted for brevity.

In this arrangement, the tail portion 116 beneficially has a plurality of guidance fins 160 for facilitating the flight of the bait dispenser 110. Preferably, the guidance fins 160 are evenly distributed around a rear end of the tail portion 116. The guidance fins 160 may also assist the reeling in of the bait dispenser 110 on the surface of the water in between casts. A tail portion 116 without guidance fins 160 can be envisaged, however, that arrangement is anticipated to be less beneficial as the bait dispenser 110 would likely have less directionality and stability.

In this case, the guidance fins 160 are at least in part formed from a preferably buoyant or substantially buoyant material. Preferably, the tail portion 116 is moulded and/or integrally formed with the guidance fins 160. A continuous structure may reduce joins and crevices that increase water disturbance. Additionally, a continuous structure may be helpful for ease of manufacture. Alternatively, the guidance fins 160 may be releasably attachable to the tail portion. The size and shape of the guidance fins 160 may be adjustable to allow the user to adapt the float to their preferences and the fishing conditions.

The first and second bait receivers 124a, 124b have one or more apertures 162 in the first and second bait receivers 124a, 124b providing fluid access to the bait receiving chamber 127. The apertures 162 may extend lengthways along the first and second bait receivers 124a, 124b. Preferably, the apertures 162 are dimensioned such that bait is not prematurely released from inside the bait receiving chamber 127. The apertures 162 may be sloped to reduce aerodynamic drag. To this end, the apertures 162 are preferably located at an end of the first and second bait receivers 124a, 124b proximal to the tail portion 116 so as to reduce water intake when the bait dispenser 110 is in the water.

In this embodiment, the tail portion 116 proximal to the first and second bait receivers 124a, 124b includes cutaway portions 164 on opposing sides to allow the first and/or second bait receiver 124a, 124b to pivot around the articulation element 126, here formed as a continuous hinge pin, without colliding with the tail portion 116.

The construction of the cutaway portions 164 is such that a ridge 166 formed thereby is of a complementary dimension and shape to that of the rear edge 168 of the respective first and/or second bait receiver 124a, 124b. The ridges 166 located on the tail portion 116 also act as stops that abut the rear edges 166 of the first and/or second bait receivers 124a, 124b to restrict a degree of the pivoting moment of the first and/or second bait receivers 124a, 124b upon moving to the open condition. Limiting the opening the first and/or second bait receivers 124a, 124b ensures the bait is fully dispensed, but that the bait dispenser is easy to reel in in a controlled manner. The cutaway portions 164 may be designed to impede the opening to specific angles as required by the angler.

The first and second bait receivers 124a, 124b in this embodiment each have a pair of engagement portions 130, as opposed to a single engagement portion, that extend laterally from an internal surface of the first and second bait receivers 124a, 124b into the bait receiving chamber 127. The engagement portions 130 are spaced apart axially such that the engagement portions mutually overlap with the engagement portions of the other of the first and second bait receivers 124a, 124b.

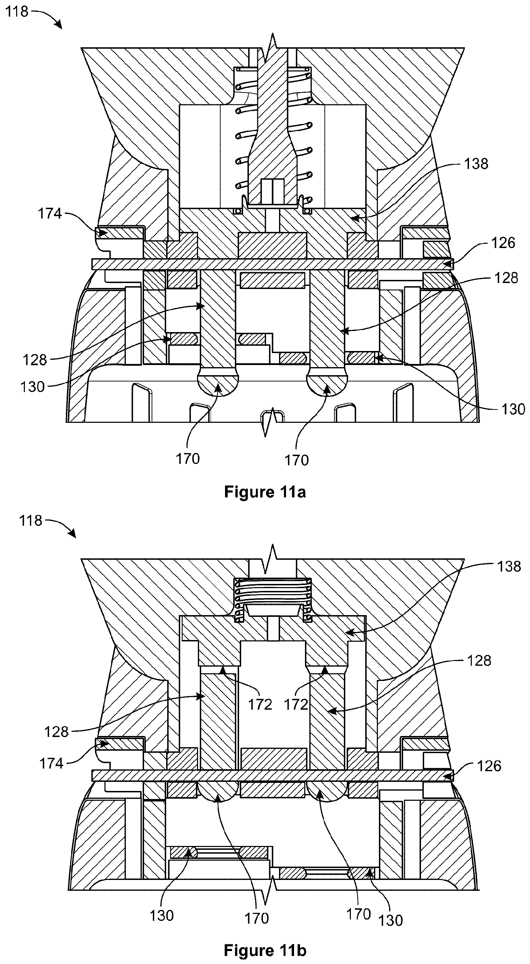

The engagement portions 130 may also be spaced apart laterally so as to provide engagement portions 130 for more than one locking element 128, in this case, for two locking elements 128. This arrangement provides more stability than a singular locking element 128. The releasable securing means 118 of the second embodiment is illustrated in detail in Figures 11a and 11b.

Two locking elements 128 are provided on the moveable base 138 in a spaced apart configuration, and which respectively engage with different engagement portions 130 of the first and second bait receivers 124a, 124b.

The locking elements 128 are provided as locking pins having a slightly enlarged head portion 170 which provides for detent engagement with the engagement portions 130 providing additional resistance to accidental delatching. A tail-proximal end of the locking elements 128 also includes a stop 172 which limits the insertion of the pins in the axial direction; this is achieved by the provision of an intermediate guide plate 174 which also advantageously aligns the locking elements 128 to the engagement portions 130. A tapered end may also achieve the same result as a stop 172 for the locking elements 128.

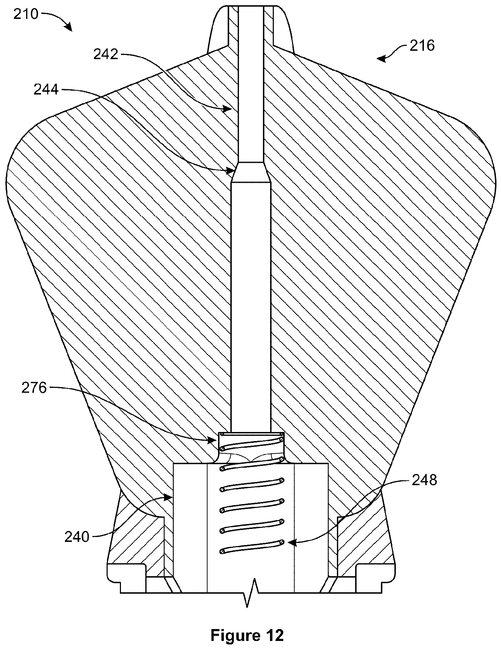

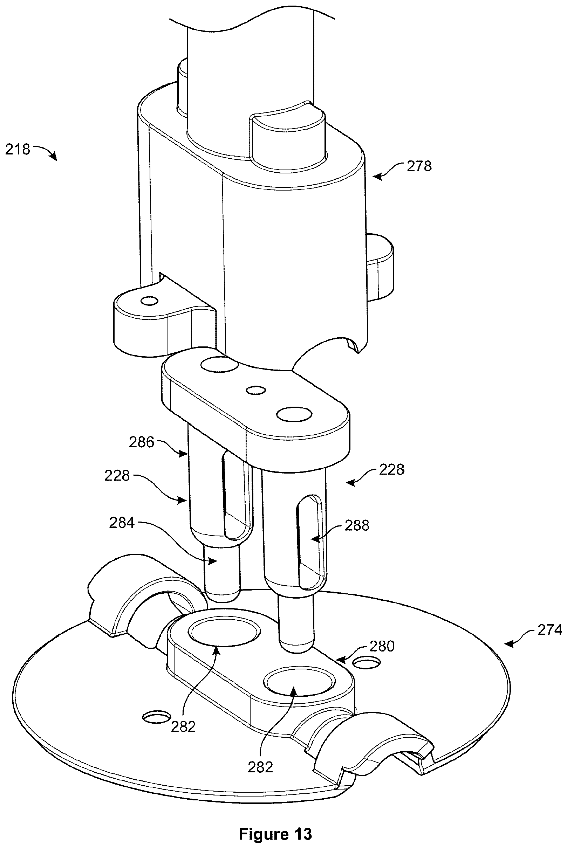

A further embodiment of bait dispenser is illustrated in Figures 12 and 13. Similar or identical references refer to parts which are similar or identical to those described above, therefore, further detailed description is omitted for brevity.

This embodiment of the bait dispenser 210 shows some alternative construction arrangements for the tail portion 216 and releasable securing means 218.

Figure 12 shows the tail portion 210 in which the bait-biasing member 248 is inserted into a specific recess 276 within the tail portion 210 between the first and second channels 240, 242. The throated portion 244 is formed as a frusto-cone to limit egress of the moveable member.

The first and second channels 240, 242 may be formed by a channel body structure 278, shown in Figure 13. This is able to be coupled to the guide plate 274 and may act as a water seal to the moving parts of the bait dispenser 210.

The guide plate 274 has a collar section 280 that extends axially above the major surface of the guide plate 274. Receiving apertures 282 extend through the major surfaces of the collar section 280. The receiving apertures 282 could be located directly on the major surface of the guide plate 274; however, this is imagined to be less beneficial as the collar section 280 provides additional torsional support to the locking elements 228.

The receiving apertures 282 are of similar or substantially similar size and shape to the locking elements 228 to guide the locking elements 228 into the engagement portions and provide lateral support to the locking elements 228. By being a similar or substantially similar size and shape, the guide plate 274 can also act to prevent water from flowing into the tail portion 216 of the bait dispenser 210 when the bait dispenser 210 is in the open condition. It is appreciated that a guide plate 274 with receiving apertures 282 larger than the size and shape of the locking elements 228 may be viable. However, this is imagined to be less beneficial as less lateral support for the locking elements 228 will be provided and water may travel up into the tail portion 216.

The channel body structure 278 in this case is axially dimensioned to allow for the locking elements 228 to be raised through the guide plate 274 to an axial extent that allows for disengagement of the locking elements 228 from the engagement portions.

The guide plate 274 preferably includes attachment means for attaching the channel body structure 278 to the guide plate 274. In the illustrated specific embodiment, the channel body structure 278 is placed over the moveable member and the moveable base and connected to the guide plate 274 by the attachment means, typically screw-threaded fasteners.

The locking elements 228 in this arrangement have narrower heads 284 to act as pins into the engagement portions. The main bodies 286 of the locking elements 228, however, include runner channels 288 through which the articulation element can extend, so that the locking elements 228 do not collide with or interfere with the pivoting action of the bait dispenser 210.

It is therefore possible to provide a bait dispenser which can be remotely triggered from a rear end by a fishing line. This has significant advantages over impact-triggered arrangements known in the art, since the angler has much greater control over the distribution of bait in the water.

The words 'comprises/comprising' and the words 'having/including' when used herein with reference to the present invention are used to specify the presence of stated features, integers, steps, or components, but do not preclude the presence or addition of one or more other features, integers, steps, components, or groups thereof.

The embodiments described above are provided by way of examples only, and various other modifications will be apparent to persons skilled in the field without departing from the scope of the invention defined in the appended claims.

## Claims

1. A bait dispenser (10; 110; 210) for use with a fishing line, the bait dispenser (10; 110; 210) comprising:
a bait dispenser body (12) having a head portion (14) and a tail portion (16; 116; 216);
the head portion (14) having first and second bait receivers (24a, 24b; 124a, 124b) together defining a bait receiving chamber (27; 127);
the first and second bait receivers (24a, 24b; 124a, 124b) being moveable relative to each other between an open and a closed condition at an articulation element (26; 126) located at or adjacent to the tail portion (16; 116; 216); and
a releasable securing means (18; 118; 218) at or adjacent to the tail portion (16; 116; 216),
**characterised in that** the releasable securing means (18; 118; 218) comprises a moveable member (20) slidable within a channel (42) of the tail portion (16; 116; 216), and a locking pin (28; 128; 228) biased towards the head portion (14) to secure the first and second bait receivers (24a, 24b; 124a, 124b) in the closed condition, the movable member (20) and locking pin (28; 128; 228) having complementary magnetic fastening means to allow releasable engagement with one another, and a rear end of the moveable member (20) having a fishing line coupling (22) for attaching the bait dispenser to an associated fishing line, a threshold force being applicable by the fishing line to draw the moveable member (20) and locking pin (28; 128; 228) upwards to permit the first and second bait receivers (24a, 24b; 124a, 124b) to move relative to one another to the open condition.

2. A bait dispenser (10; 110; 210) as claimed in claim 1, wherein the tail portion (16; 116; 216) is at least in part formed from a buoyant or substantially buoyant material.

3. A bait dispenser (10; 110; 210) as claimed in claim 1 or claim 2, wherein the head portion (14) has ogive or substantially ogive curvature.

4. A bait dispenser (10; 110; 210) as claimed in any one of the preceding claims, wherein the tail portion (16; 116; 216) has ridges abuttable with the first and second bait receivers (24a, 24b; 124a, 124b) to limit the opening of the first and second bait receivers (24a, 24b; 124a, 124b).

5. A bait dispenser (10; 110; 210) as claimed in any one of the preceding claims, wherein each of the first and second bait receivers (24a, 24b; 124a, 124b) has one or more apertures for the release of trapped air from the bait receiving chamber (27; 127).

6. A bait dispenser (10; 110; 210) as claimed in any one of the preceding claims, wherein the releasable securing means (18; 118; 218) comprises one or more engagement portions (30; 130) associated with each of the first and second bait receivers (24a, 24b; 124a, 124b) which mutually overlap in the closed condition for releasable engagement with the one of more locking pins (28; 128; 228).

7. A bait dispenser (10; 110; 210) as claimed in claim 6, wherein each of the first and second bait receivers (24a, 24b; 124a, 124b) has a pair of said engagement portions (30; 130) which are spaced apart in an axial direction to permit overlap with the said corresponding engagement portions of the other of the first and second bait receivers (24a, 24b; 124a, 124b).

8. A bait dispenser (10; 110; 210) as claimed in claim 7, wherein each of the first and second bait receivers (24a, 24b; 124a, 124b) has a pair of said engagement portions (30; 130) which are spaced apart in a lateral direction to permit engagement with a plurality of said locking pins (28; 128; 228).

9. A bait dispenser (10; 110; 210) as claimed in any one of claims 6 to 8, wherein the releasable securing means (18; 118; 218) has a guide plate dimensioned to positionally align the or each locking pin (28; 128; 228) with the said engagement portions (30; 130).

10. A bait dispenser (10; 110; 210) as claimed in any one of claims 6 to 9, wherein the releasable securing means (18; 118; 218) has a biasing member to bias the or each locking pin (28; 128; 228) into engagement with the engagement portions (30; 130).

11. A bait dispenser (10; 110; 210) as claimed in any one of the preceding claims, wherein the or each locking pin (28; 128; 228) has an at least in part tapered extent.

12. A bait dispenser (10; 110; 210) as claimed in any one of the preceding claims, wherein the releasable securing means (18; 118; 218) has fastening means to allow for releasable engagement between the moveable member (20) and a moveable base (38; 138) to which the locking pin (28; 128; 228) is mounted, the moveable member (20) being moveable relative to the moveable base (38; 138).

13. A bait dispenser (10; 110; 210) as claimed in claim 12, wherein the channel has a throated portion (44) to limit the extent of the slidable movement of the moveable member (20).

14. A bait dispenser (10; 110; 210) as claimed in any one of the preceding claims, further comprising a biasing element (32) for biasing the first and second bait receivers (24a, 24b; 124a, 124b) into the open condition.

15. A method of using a bait dispenser (10; 110; 210) as claimed in any of the preceding claims, the method comprising the steps of:
a. loading bait into the bait receiving chamber (27; 127) when in the open condition;
b. closing the bait receiving chamber (27; 127) using the releasable securing means (18; 118; 218);
c. attaching the bait dispenser (10; 110; 210) onto an associated fishing line;
d. casting the bait dispenser (10; 110; 210) into a body of water;
e. positioning, using the associated fishing line, the bait dispenser (10; 110; 210) in a desired position of the body of water; and
f. exerting a threshold force using the associated fishing line on the releasable securing means (18; 118; 218) to release the first and second bait receivers (24a, 24b; 124a, 124b) at the said desired position.

## Patentansprüche

1. Köderspender (10; 110; 210) zur Verwendung mit einer Angelschnur, wobei der Köderspender (10; 110; 210) umfasst:
einen Köderspenderkörper (12) mit einem Kopfabschnitt (14) und einem Schwanzabschnitt (16; 116; 216);
wobei der Kopfabschnitt (14) eine erste und eine zweite Köderaufnahme (24a, 24b; 124a, 124b) aufweist, die zusammen eine Köderaufnahmekammer (27; 127) definieren;
die erste und die zweite Köderaufnahme (24a, 24b; 124a, 124b) zwischen einem offenen und einem geschlossenen Zustand an einem Gelenkelement (26; 126), das sich an oder benachbart zu dem Schwanzabschnitt (16; 116; 216) befindet, relativ zueinander bewegbar sind; und
ein lösbares Sicherungsmittel (18; 118; 218) an oder benachbart zu dem Schwanzabschnitt (16; 116; 216),
**dadurch gekennzeichnet, dass** das lösbare Sicherungsmittel (18; 118; 218) ein bewegliches Element (20), das innerhalb eines Kanals (42) des Schwanzabschnitts (16; 116; 216) verschiebbar ist, und einen Arretierstift (28; 128; 228) umfasst, der zu dem Kopfabschnitt (14) hin vorgespannt ist, um die erste und die zweite Köderaufnahme (24a, 24b; 124a, 124b) in dem geschlossenen Zustand zu sichern, wobei das bewegliche Element (20) und der Arretierstift (28; 128; 228) komplementäre magnetische Befestigungsmittel aufweisen, um einen lösbaren Eingriff miteinander zu ermöglichen, und ein hinteres Ende des beweglichen Elements (20) eine Angelschnurkopplung (22) zum Anbringen des Köderspenders an einer assoziierten Angelschnur aufweist, wobei eine Schwellwertkraft durch die Angelschnur anwendbar ist, um das bewegliche Element (20) und der Arretierstift (28; 128; 228) nach oben zu ziehen, um zuzulassen, dass sich die erste und die zweite Köderaufnahme (24a, 24b; 124a, 124b) relativ zueinander zu dem offenen Zustand bewegen.

2. Köderspender (10; 110; 210) nach Anspruch 1, wobei der Schwanzabschnitt (16; 116; 216) zumindest zum Teil aus einem schwimmfähigen oder im Wesentlichen schwimmfähigen Material hergestellt ist.

3. Köderspender (10; 110; 210) nach Anspruch 1 oder Anspruch 2, wobei der Kopfabschnitt (14) eine spitzbogenförmige oder im Wesentlichen spitzbogenförmige Wölbung aufweist.

4. Köderspender (10; 110; 210) nach einem der vorhergehenden Ansprüche, wobei der Schwanzabschnitt (16; 116; 216) Grate aufweist, die mit der ersten und der zweiten Köderaufnahme (24a, 24b; 124a, 124b) anlegbar sind, um die Öffnung der ersten und der zweiten Köderaufnahme (24a, 24b; 124a, 124b) einzuschränken.

5. Köderspender (10; 110; 210) nach einem der vorhergehenden Ansprüche, wobei jede der ersten und der zweiten Köderaufnahme (24a, 24b; 124a, 124b) einen oder mehrere Durchbrüche zur Freisetzung von eingeschlossener Luft aus der Köderaufnahmekammer (27; 127) aufweist.

6. Köderspender (10; 110; 210) nach einem der vorhergehenden Ansprüche, wobei das lösbare Sicherungsmittel (18; 118; 218) einen oder mehrere Eingriffsabschnitte (30; 130) umfasst, die mit jeder der ersten und der zweiten Köderaufnahme (24a, 24b; 124a, 124b) assoziiert sind und die sich in dem geschlossenen Zustand zum lösbaren Eingriff mit dem einen oder den mehreren Arretierstiften (28; 128; 228) gegenseitig überlappen.

7. Köderspender (10; 110; 210) nach Anspruch 6, wobei jede der ersten und der zweiten Köderaufnahmen (24a, 24b; 124a, 124b) ein Paar der Eingriffsabschnitte (30; 130) aufweist, die in einer axialen Richtung beabstandet sind, um eine Überlappung mit den entsprechenden Eingriffsabschnitten der anderen der ersten und der zweiten Köderaufnahme (24a, 24b; 124a, 124b) zuzulassen.

8. Köderspender (10; 110; 210) nach Anspruch 7, wobei jede der ersten und der zweiten Köderaufnahmen (24a, 24b; 124a, 124b) ein Paar der Eingriffsabschnitte (30; 130) aufweist, die in einer seitlichen Richtung beabstandet sind, um einen Eingriff mit einer Vielzahl der Arretierstifte (28; 128; 228) zuzulassen.

9. Köderspender (10; 110; 210) nach einem der Ansprüche 6 bis 8, wobei das lösbare Sicherungsmittel (18; 118; 218) eine Führungsplatte aufweist, die dazu dimensioniert ist, den oder jeden Arretierstift (28; 128; 228) mit den Eingriffsabschnitten (30; 130) positionell auszurichten.

10. Köderspender (10; 110; 210) nach einem der Ansprüche 6 bis 9, wobei das lösbare Sicherungsmittel (18; 118; 218) ein Vorspannelement aufweist, um den oder jeden Arretierstift (28; 128; 228) in einen Eingriff mit den Eingriffsabschnitten (30; 130) vorzuspannen.

11. Köderspender (10; 110; 210) nach einem der vorhergehenden Ansprüche, wobei der oder jeder Arretierstift (28; 128; 228) ein zumindest zum Teil verjüngtes Ausmaß aufweist.

12. Köderspender (10; 110; 210) nach einem der vorhergehenden Ansprüche, wobei das lösbare Sicherungsmittel (18; 118; 218) Befestigungsmittel aufweist, um einen lösbaren Eingriff zwischen dem beweglichen Element (20) und einer beweglichen Basis (38; 138), an der der Arretierstift (28; 128; 228) montiert ist, zu ermöglichen, wobei das bewegliche Element (20) relativ zu der beweglichen Basis (38; 138) beweglich ist.

13. Köderspender (10; 110; 210) nach Anspruch 12, wobei der Kanal einen Halsabschnitt (44) aufweist, um das Ausmaß der verschiebbaren Bewegung des beweglichen Elements (20) einzuschränken.

14. Köderspender (10; 110; 210) nach einem der vorhergehenden Ansprüche, weiterhin umfassend ein Vorspannelement (32) zum Vorspannen der ersten und der zweiten Köderaufnahme (24a, 24b; 124a, 124b) in den offenen Zustand.

15. Verfahren zur Verwendung eines Köderspenders (10; 110; 210) nach einem der vorhergehenden Ansprüche, wobei das Verfahren die Schritte umfasst:
a. Laden von Köder in die Köderaufnahmekammer (27; 127), wenn sie in dem offenen Zustand ist;
b. Schließen der Köderaufnahmekammer (27; 127) unter Verwendung des lösbaren Sicherungsmittels (18; 118; 218);
c. Anbringen des Köderspenders (10; 110; 210) an einer assoziierten Angelschnur,
d. Werfen des Köderspenders (10; 110; 210) in ein Gewässer;
e. Positionieren des Köderspenders (10; 110; 210) in einer gewünschten Position in dem Gewässer unter Verwendung der assoziierten Angelschnur und
f. Ausüben einer Schwellwertkraft auf das lösbare Sicherungsmittel (18; 118; 218) unter Verwendung der assoziierten Angelschnur, um die erste und die zweite Köderaufnahme (24a, 24b; 124a, 124b) an der gewünschten Position freizugeben.

## Revendications

1. Un distributeur d'appât (10 ; 110 ; 210) destiné à être utilisé avec une ligne de pêche, le distributeur d'appât (10 ; 110 ; 210) comprenant :
un corps de distributeur d'appât (12) ayant une partie de tête (14) et une partie de queue (16 ; 116 ; 216) ; la partie de tête (14) ayant un premier et second récepteur d'appât (24a, 24b ; 124a, 124b) définissant ensemble une chambre de réception d'appât (27 ; 127) ;
le premier et second récepteur d'appât (24a, 24b ; 124a, 124b) étant mobile l'un par rapport à l'autre entre un état ouvert et un état fermé au niveau d'un élément d'articulation (26 ; 126) situé au niveau ou à proximité de la partie de queue (16 ; 116 ; 216) ;
et un moyen de fixation libérable (18 ; 118 ; 218) au niveau ou à proximité de la partie de queue (16 ; 116; 216), **caractérisé en ce que** le moyen de fixation libérable (18 ; 118 ; 218) comprend un élément mobile (20) coulissant dans un canal (42) de la partie de queue (16 ; 116 ; 216), et une goupille de verrouillage (28 ; 128 ; 228) soumise à une force vers la partie de tête (14) pour fixer le premier et second récepteur d'appât (24a, 24b ; 124a, 124b) dans l'état fermé, l'élément mobile (20) et la goupille de verrouillage (28 ; 128 ; 228) ayant un moyen de fixation magnétique complémentaire pour permettre un engagement libérable l'un avec l'autre, et une extrémité arrière de l'élément mobile (20) ayant un couplage de ligne de pêche (22) pour attacher le distributeur d'appât à une ligne de pêche associée, une force de seuil étant applicable par la ligne de pêche pour tirer l'élément mobile (20) et la goupille de verrouillage (28 ; 128 ; 228) vers le haut pour permettre aux premier et second récepteurs d'appât (24a, 24b ; 124a, 124b) de se déplacer l'un par rapport à l'autre vers la condition ouverte.

2. Un distributeur d'appât (10 ; 110 ; 210) selon la revendication 1, dans lequel la partie de queue (16 ; 116 ; 216) est au moins en partie formée d'un matériau flottant ou sensiblement flottant.

3. Un distributeur d'appât (10 ; 110 ; 210) selon la revendication 1 ou la revendication 2, dans lequel la partie de tête (14) présente une courbure en ogive ou sensiblement en ogive.

4. Un distributeur d'appât (10 ; 110 ; 210) selon l'une quelconque des revendications précédentes, dans lequel la partie de queue (16 ; 116 ; 216) présente des crêtes pouvant venir en butée contre le premier et second récepteur d'appât (24a, 24b ; 124a, 124b) pour limiter l'ouverture du premier et second récepteur d'appât (24a, 24b ; 124a, 124b).

5. Un distributeur d'appât (10 ; 110 ; 210) selon l'une quelconque des revendications précédentes, dans lequel chacun du premier et second récepteur d'appât (24a, 24b ; 124a, 124b) comporte une ou plusieurs ouvertures pour la libération de l'air emprisonné dans la chambre de réception d'appât (27 ; 127).

6. Un distributeur d'appât (10 ; 110 ; 210) selon l'une quelconque des revendications précédentes, dans lequel le moyen de fixation libérable (18 ; 118 ; 218) comprend une ou plusieurs parties d'engagement (30 ; 130) associées à chacun du premier et second récepteur d'appât (24a, 24b ; 124a, 124b) qui se chevauchent mutuellement dans l'état fermé pour un engagement libérable avec l'une ou plusieurs des goupilles de verrouillage (28 ; 128 ; 228).

7. Un distributeur d'appât (10 ; 110 ; 210) selon la revendication 6, dans lequel chacun du premier et second récepteur d'appât (24a, 24b ; 124a, 124b) comporte une paire desdites parties d'engagement (30 ; 130) qui sont espacées dans une direction axiale pour permettre un chevauchement avec lesdites parties d'engagement correspondantes de l'autre du premier et second récepteur d'appât (24a, 24b ; 124a, 124b).

8. Un distributeur d'appât (10 ; 110 ; 210) selon la revendication 7, dans lequel chacun du premier et second récepteur d'appât (24a, 24b ; 124a, 124b) comporte une paire desdites parties d'engagement (30 ; 130) qui sont espacées dans une direction latérale pour permettre l'engagement avec une pluralité desdites goupilles de verrouillage (28 ; 128 ; 228).

9. Un distributeur d'appât (10 ; 110 ; 210) selon l'une quelconque des revendications 6 à 8, dans lequel le moyen de fixation libérable (18 ; 118 ; 218) comporte une plaque de guidage dimensionnée pour aligner en position la ou chaque goupille de verrouillage (28 ; 128 ; 228) avec lesdites parties d'engagement (30 ; 130).

10. Un distributeur d'appâts (10 ; 110 ; 210) tel que revendiqué dans l'une quelconque des revendications 6 à 9, dans lequel le moyen de fixation amovible (18 ; 118 ; 218) comprend un élément de tension pour soumettre la ou chaque goupille de verrouillage (28 ; 128 ; 228) à une force en vue de son engagement avec les portions d'engagement (30 ; 130).

11. Un distributeur d'appât (10 ; 110 ; 210) selon l'une quelconque des revendications précédentes, dans lequel la ou chaque goupille de verrouillage (28 ; 128 ; 228) comporte une étendue au moins en partie conique.

12. Un distributeur d'appât (10 ; 110 ; 210) selon l'une quelconque des revendications précédentes, dans lequel le moyen de fixation libérable (18 ; 118 ; 218) comporte un moyen de fixation permettant un engagement libérable entre l'élément mobile (20) et une base mobile (38 ; 138) sur laquelle la goupille de verrouillage (28 ; 128 ; 228) est montée, l'élément mobile (20) étant mobile par rapport à la base mobile (38 ; 138).

13. Un distributeur d'appât (10 ; 110 ; 210) selon la revendication 12, dans lequel le canal comporte une partie à gorge (44) pour limiter l'étendue du mouvement coulissant de l'élément mobile (20).

14. Un distributeur d'appâts (10 ; 110 ; 210) tel que revendiqué dans l'une quelconque des revendications précédentes, comprenant en outre un élément de tension (32) pour soumettre le premier et second récepteur d'appât (24a, 24b ; 124a, 124b) à une force en vue de leur mise en position ouverte.

15. Un procédé d'utilisation d'un distributeur d'appât (10 ; 110 ; 210) selon l'une quelconque des revendications précédentes, le procédé comprenant les étapes suivantes :
a charger l'appât dans la chambre de réception d'appât (27 ; 127) lorsqu'elle est en état ouvert ;
b fermer la chambre de réception d'appât (27 ; 127) à l'aide d'un moyen de fixation libérable (18; 118; 21 8);
c fixer le distributeur d'appât (10 ; 110 ; 210) sur une ligne de pêche associée ;
d lancer le distributeur d'appât (10 ; 110 ; 210) dans un plan d'eau ;
e positionner, à l'aide de la ligne de pêche associée, le distributeur d'appâts (10 ; 110 ; 210) dans une position souhaitée du plan d'eau ; et
f exercer une force de seuil à l'aide de la ligne de pêche associée sur un moyen de fixation libérable (18 ; 118 ; 218) pour libérer le premier et second récepteur d'appât (24a, 24b ; 124a, 124b) à ladite position souhaitée.
